# EUROPEAN PATENT SPECIFICATION

(11) **EP 1 998 589 B1**
(45) Date of publication and mention of the grant of the patent: **22.06.2011**
(21) Application number: 08161137.8
(22) Date of filing: 19.05.2000
(51) Int. Cl.: H04W 28/16, H04W 72/04

(54) **Channel assignment in a spread spectrum CDMA communication system**
Kanalzuweisung in einem CDMA-Spreizspektrumkommunikationssystem
Affectation de canaux dans un système de communication CDMA à dispersion spectrale

(30) Priority: 19.05.1999 US 134881 P; 24.05.1999 US 135588 P; 11.06.1999 US 138922 P
(43) Date of publication of application: 03.12.2008
(62) Divisional of application: 00932658.8
(73) Proprietor: INTERDIGITAL TECHNOLOGY CORPORATION, Wilmington, DE 19801 (US)
(72) Inventor: Zeira, Eldad, Huntington, NY 11743 (US); Dick, Steven G., Nesconset, NY 11767 (US)
(74) Representative: Ahrengart, Kenneth

(56) References cited:
- WO-A-98/49857
- TIA/EIA: "IS-95B" 1 March 1999 (1999-03-01), TELECOMMUNICATIONS INDUSTRY ASSOCIATION , ARLINGTON, VA, USA , XP002145285 * pages 7-186, line 1 - pages 7-191, line 8 *

## Description

### BACKGROUND

The invention relates generally to resource allocation in a wireless code division multiple access communication system. More specifically, the invention relates to assigning uplink and downlink channels in response to access requests of user equipment.

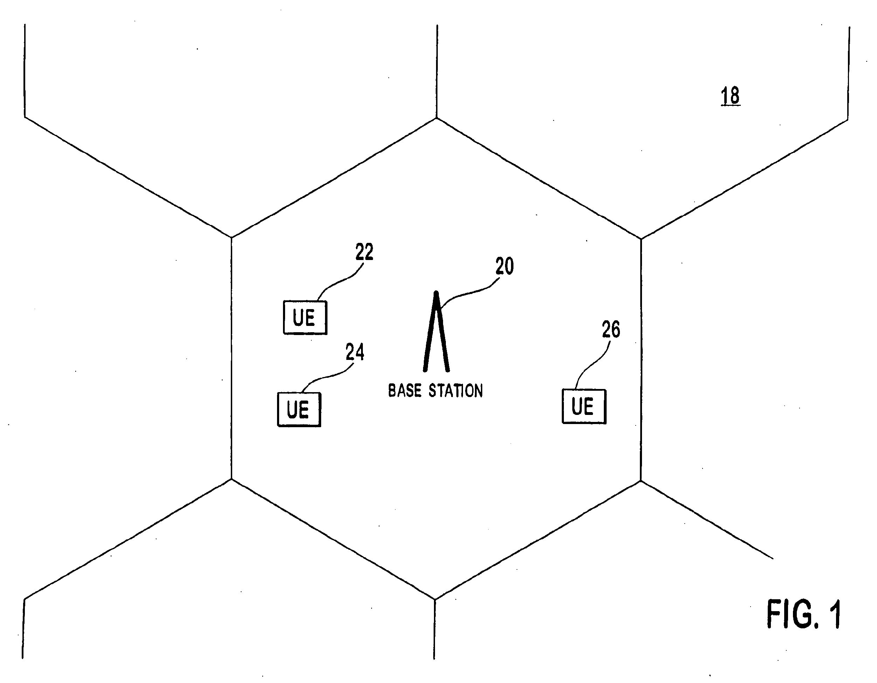

**Figure 1** depicts a wireless spread spectrum Code Division Multiple Access (CDMA) communication system **18.** A base station **20** communicates with user equipment (UE) **22- 26** in its operating area. In a spread spectrum CDMA system **18,** data signals are communicated between UEs **22-26** and the base station **20** over the same spread bandwidth. Each data signal in the shared bandwidth is spread with a unique chip code sequence. Upon reception, using a replica of the chip code sequence, a particular data signal is recovered.

Since signals are distinguished by their chip code sequences (code), separate dedicated communication channels are created using different codes. Signals from the base station **20** to the UEs **22-26** are sent on downlink channels and signals from the UEs **22-26** to the base station **20** are sent on uplink channels. For coherent detection of downlink transmissions by the UEs **22-26,** pilot signals are transmitted to all the UEs **22-26** within the base station's operating range. The UEs **22-26** condition their receivers based on the pilot signals to enable data reception.

In many CDMA systems, a common packet channel (CPCH) is used for uplink transmissions. A CPCH is capable of carrying packets of data from different UEs **22-26.** Each packet is distinguishable by its code. For detection by the base station **20,** the packets have a preamble which also distinguishes it from other packets. The CPCH is typically used to carry infrequently communicated data at high rates.

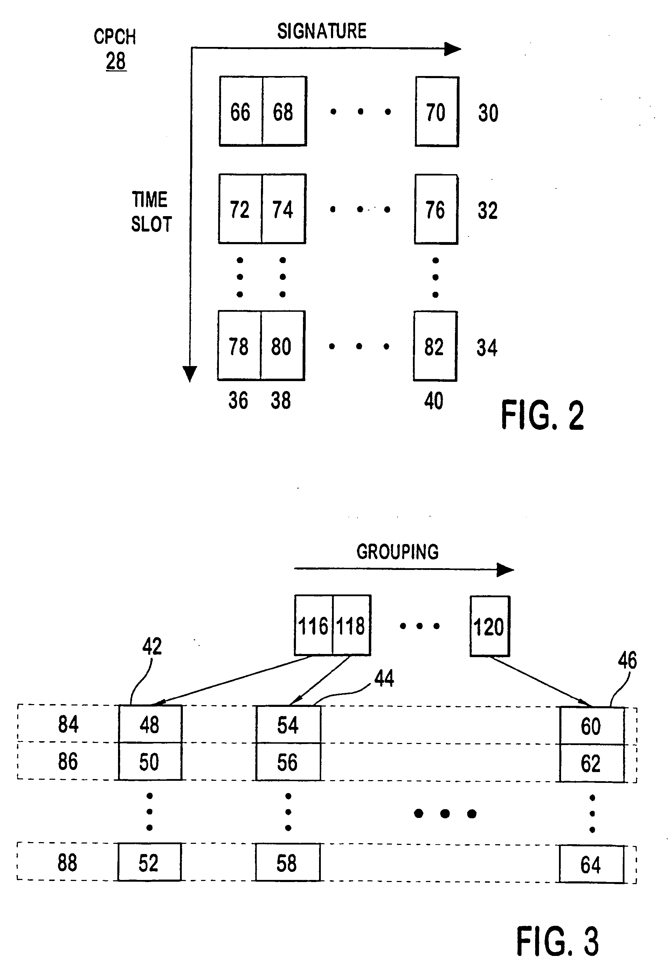

**Figure 2** depicts a CPCH access scheme **28.** The CPCH access scheme **28** is time divided into intervals having time slots **30-34,** such as 8 time slots proposed for the Third Generation Mobile Telecommunications System (IMT-2000). A group of predetermined signatures **36-40** are assigned to the time slots **30-34** to allow more than one UE **22-26** to use the same time slot **30-34.** A particular signature used within a particular time slot is referred to as an access opportunity **66-82.** For instance, for each of the 8 time slots in the proposal for IMT-2000, one out of 16 signatures is available to be chosen, resulting in 128 access opportunities. Each signature **36-40** is preassigned a virtual channel. A virtual channel uniquely defines operating parameters for both the uplink and downlink, i.e., an uplink spreading factor and a unique code for the downlink.

- Broadcast from the base station **20** to each UE **22-26** is the availability of each virtual channel over an acknowledge indication channel (AICH). The UE **22-26** monitors the AICH to determine the availability of each virtual channel. Based on the operating parameters required by the UE **22-26** and the availability of the virtual channels, the UE determines the access opportunity to select. Upon identifying a particular access opportunity, the base station **20** sends out an acknowledgment message (ACK) if the corresponding downlink channel is still available. In the proposal for IMT-2000, the ACK simply repeats the signatures **36-40** associated with the access attempt. If the downlink channel is not available, a negative acknowledge (NAK) is sent.

After receiving a corresponding acknowledgment, the UEs **22-26** determine the proper code to recover communications on the downlink channel based on the access opportunity **66-82** used to send the UEs' packet. Either stored in the UEs **22-26** or transmitted on a Base Station's Broadcast Channel is a list of the code assigned to each access opportunity **66-82.** This scheme severely increases the packet collision probability and therefore the packet delay which is undesirable.

In some situations, monitoring the AICH is not desirable. At a particular moment, some UEs **22-26** will be operating in a "sleep" mode. In the "sleep" mode, the UE **22-26** only runs when there is a need to send data. Monitoring the AICH during "sleep" mode will both reduce battery life and introduce a delay in the transmission of the first packet. Additionally, when a UE **22-26** borders between two base station's operating areas, monitoring multiple AICHs further exacerbates -these drawbacks.

Monitoring creates other problems. It further complicates the UE's receiving circuitry, making the UE **22-26** more expensive.

Monitoring results in a suboptimum use of the CPCH. AICH monitoring provides information when a channel becomes busy. The time at which the channel becomes free is deduced on a worst case maximum packet length. If a packet is not maximum length, the channel will be idle while the UEs **22-26** are waiting to transmit. On the other hand, if monitoring is not performed in such a system, channel availability information is unavailable. The UE **22-26** may randomly choose a busy virtual channel increasing the packet delay by causing a collision. Accordingly, it would be desirable to allow the UEs **22-26** to wait a period shorter than the maximum packet length and provide for some other collision reducing mechanism.

One technique to reduce the possibility of collision is to raise the number of codes, for instance to 128 different codes. In the proposal for IMT-2000 the 128 sequences represent approximately half of the sequences available at the base station 20. Accordingly, this solution is undesirable. Additionally, since monitoring the AICH complicates the UE receiver circuitry increasing its cost, it is undesirable. Accordingly, an alternate approach to assign virtual channels is desirable.

WO 9849857 discloses a system for transmitting random access packets from mobile stations to a base station. A preamble signature is added to each packet to be transmitted by the mobile station in a time slot of repeating frames. The signature is a short spreading code which is concatenated with a unique long spreading code. The packet including the preamble is received by the base station. The preamble facilitates recovery of data from the packet.

TIA/EIA-95-B, "Mobile Station-Base Station Systems" discloses an approach for channel assignment in a code division multiple access system. A channel assignment message is sent to a mobile station. The message indicates information regarding the channel, such as its spreading code. Accordingly, an alternate approach to assign virtual channels is desirable.

### SUMMARY

A selected user equipment transmits a signature in a selected one of the common packet channel's time slots. The base station, in response to receiving the transmitted signature, selects a currently unused code, if available, out of a plurality of code associated with the access opportunity defined by the selected signature and selected time slot. The base station transmits an acknowledgment signal comprising an identifier of the selected code. The selected user equipment receives the acknowledgment signal. The selected user equipment and the base station

### BRIEF DESCRIPTION OF THE DRAWINGS

**Figure 1** is an illustration of a typical wireless spread spectrum CDMA communication system.
**Figure 2** is an illustration of a common packet channel access scheme.
**Figure 3** is an illustration assigning virtual channels.
**Figure 4** is a graph of the probability of a collision versus demand for the prior art and the virtual channel assignment.
**Figure 5** illustrates a simplified base station and user equipment.
**Figure 6** is an identifier transmitter circuit.
**Figure 7** is an identifier receiver circuit.
**Figure 8** is a table of an assignment of Golay sequences.
**Figure 9** is a circuit for detecting the Golay sequences of **Figure 8****.**
**Figure 10** is an assignment table for a system having physical channels with two time slots.

### DETAILED DESCRIPTION OF THE PREFERRED EMBODIMENTS

The preferred embodiments will be described with reference to the drawing figures where like numerals represent like elements throughout. **Figure 3** illustrates a virtual channel assignment scheme. Each virtual channel **48-64** is defined by its operating parameters, such as uplink spreading factor and down link code. Additionally, instead of assigning virtual channels **48-64,** the same principles may be applied to assigning physical channels which are defined by their downlink code.

To reduce the number of used physical channels and increase the power level of each channel, each physical channel may be multiplexed, such as by using two time slots. Using two time slots will increase the channel's effective data rate, such as from 8 Kbps to 16 Kbps. In such a system, the virtual channel **48-64** also defines which multiplexed signal is assigned to the UE **22-26.**

Instead of assigning a single virtual channel for each signature **36-40** as in the prior art, a set **42-46** of virtual channels are assigned for each grouping **116-120** of access opportunities. A grouping may contain all of the channels in one group or as few as 2 or 3 channels. One possible virtual channel grouping may group all virtual channels with the same data rate for the uplink. For groups having the same uplink data rate, the UE **22-26** selects an access opportunity out of the groups having the UE's desired uplink data rate. Another grouping may be formed based on the access opportunities' signature **36-40.** Based on the selected access request and the UE's priority, one of the virtual channels **48-64** assigned to the group **116-120** associated -with the access attempt is used for the UE if available. Once the virtual channel is assigned, it will not be assigned again until the particular UE's transaction is complete. Additionally, a receiving circuit at the base station **20** with the proper data rate is assigned to the UE **22-26.**

In the prior art system, the UEs **22-26** determine which channel is assigned to the downlink based on the access opportunity **66-82.** Virtual channel assignment transmits a channel identifier **84-88,** preferably along with the ACK, indicating which of the set **42-46** of channels assigned to the group **116-120** is selected. When all of the virtual channels are in the same group, the identifier **84-88** indicates the selected virtual channel. If no channel is available out of the set **42-46,** a no channel is available (NAK) identifier is sent. Since more than one virtual channel is potentially assigned to a particular access attempt, the probability of UE collisions is reduced.

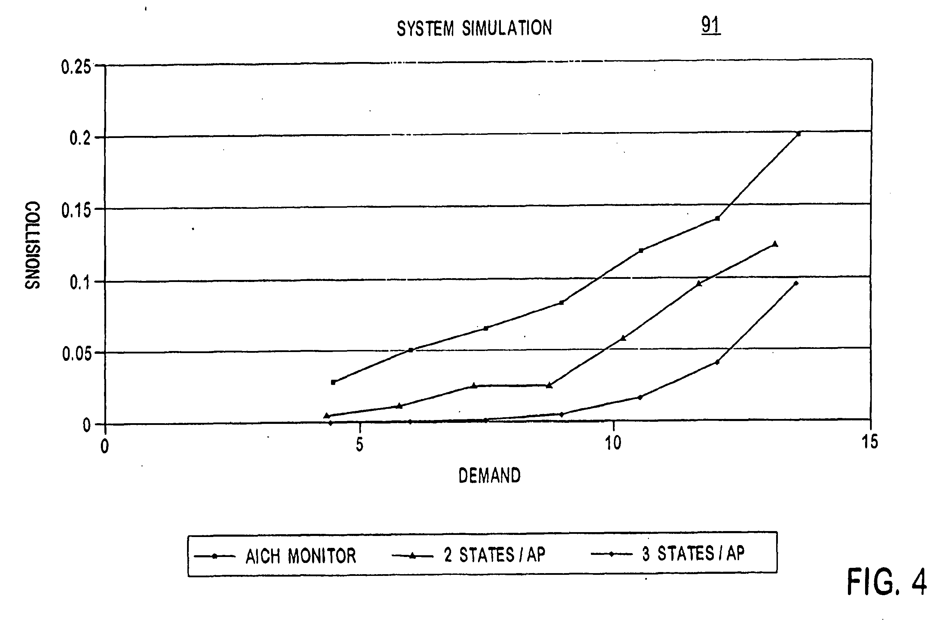

**Figure 4** is a graph **91** depicting the probability of a collision (Collisions) versus the number of UEs **22-26** requesting access (Demand). As shown, the collisions using 2 or 3 virtual channels per group (2 states/AP or 3 states/AP) is lower than the prior art (AICH monitor) regardless of demand.

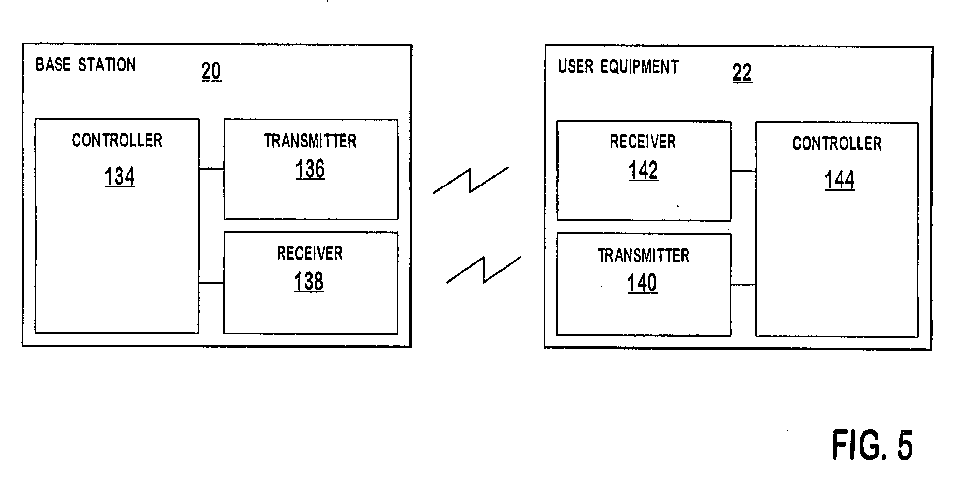

**Figure 5** illustrates a simplified base station **20** and a UE **22** for use in implementing channel assignment. The UE **22** has a controller **144** for determining the code of the uplink and downlink communications. A UE transmitter **140** sends communications, such as access opportunities and uplink packet signals, to the base station **20.** A UE receiver **142** receives communications, such as ACK messages, - NAK messages and downlink signals.

The base station **20** has a controller **134** for determining the code of uplink and downlink communications as well as determining channel availability. A base station transmitter **136** sends communications, such as ACK messages, NAK messages and downlink signals, to the UE **22.** The base station receiver **138** receives communications, such as access opportunities and uplink packet signals.

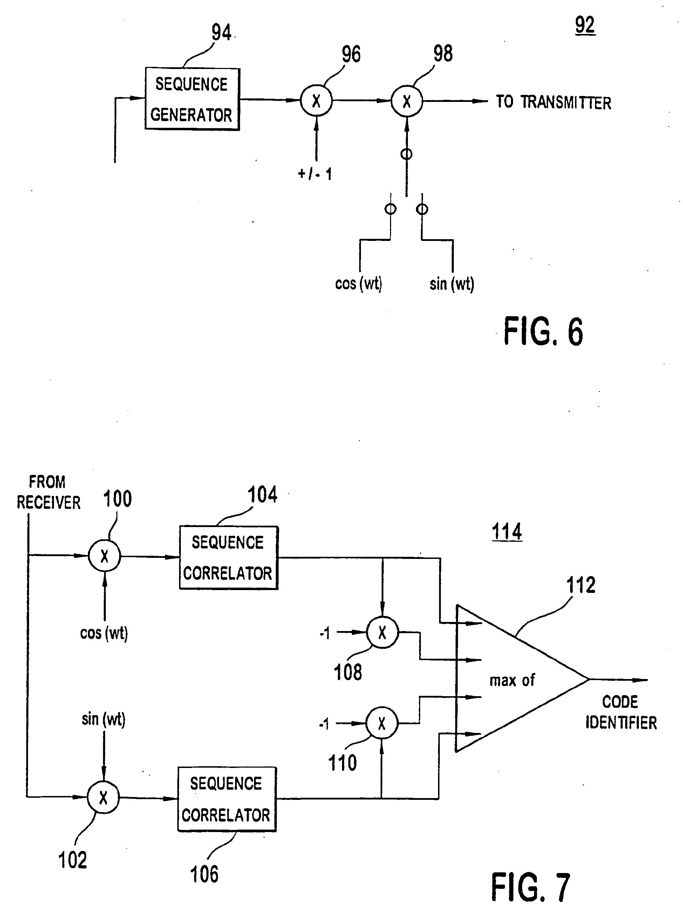

Techniques for sending the identifiers are to attach extra bits to the ACK or to change the phase of the ACK to indicate the selected identifier. For a system using a single group of virtual channels, the extra bits identify the selected virtual channel. Circuits for sending the identifiers by phase shifting the ACK are depicted in **Figures** 6 and **7****.** The circuits are capable of sending up to four channel identifiers without a NAK identifier or three channel identifiers with a NAK identifier. In the transmitter circuit **92** of **Figure 6****,** the ACK sequence is generated by a sequence generator **94.** The sequence itself is associated with the preamble access opportunity and is unique to the access attempt. Several such sequences may be transmitted to several users at the same time. The ACK sequence is passed through a mixer **96** which multiplies the signal with either +1 or -1. The mixed signal is subsequently passed through another mixer **98** where the signal is mixed with an in-phase carrier (cos wt) or a quadrature carrier (sin wt). As a result of the two mixers **96, 98,** the transmitted ACK is at one of four phases 0°, 90°, 180° or 270°. Each identifier **84-88** is preassigned to one of the phases.

The receiver circuit **14** of **Figure 7** is used to determine the phase of the ACK - sent by the transmitter circuit **92** of **Figure 6****.** The ACK is mixed with both an in-phase carrier by mixer **100** and a quadrature carrier by mixer **102.** Each of the mixed signals are correlated with a replica of the ACK's sequence by sequence correlators **104, 106.** The in-phase and quadrature correlation signals are each negated by mixers **108, 110** by multiplying the correlation signals by -1. The two correlated signals and the two negated signals are supplied to an identifier circuit **112.** The identifier circuit **112** determines which of the four phased versions of the correlated signal has the highest magnitude. Since the downlink transmissions from the base station are synchronized and their phase is known, the identifier circuit **112** determines which identifier **84-88** was sent based on the phase of the ACK. A list stored either in the UEs **22-26** or transmitted on a Base Station's Broadcast Channel is used to determine the virtual channel **48-64** associated with the identifier **84-88** and the group **116-120** of the UE's access request. Using the determined virtual channel **48-64,** transmissions sent by the base station **20** using the selected downlink channel's code are recovered at the UE **22-26.**

Another technique for sending the identifier **84-88** is to use the ACK and a collision resolution signal (CR). After a collision between UEs **22-26** is detected at a base station **20,** in many spread spectrum systems the base station **20** sends a CR directed to the colliding UEs. The CR has a sequence which is associated with a specific UE **22** for detection by the UE **22.** By inverting the ACK and CR, an identifier **84-88** is sent to the specific UE **22.** An inverted ACK indicates a NAK. - By inverting the CR, one virtual channel is assigned to +CR a second virtual channel is assigned to -CR. Accordingly, using the ACK and CR an identifier indicating either a NAK or one of two channels is sent. Additionally, using a CR with multiple states, such as three, one of multiple channels is assigned to the CR.

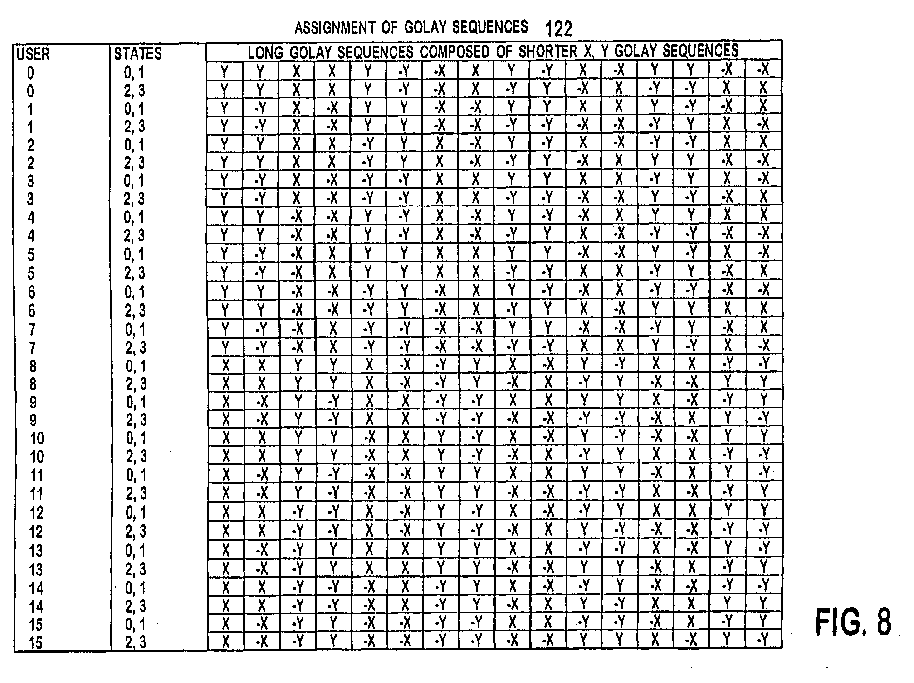

Alternatively, the identifier is sent with a signal using a Golay sequence. A Golay sequence is constructed out of short sequences, such as X and Y. By inverting the shorter sequences and changing their order many unique longer sequences may be constructed as shown in table **122** of **Figure 8****.** To reduce the size of the table **122,** only half of the possible sequences are shown. By negating each sequence, another unique Golay sequence results. As shown in **Figure 8****,** each UE **22-26** is assigned a unique set of Golay sequences, such as 4. For instance, user 0 is assigned four sequences, the top two sequences and the negation of those sequences. By assigning each of the Golay sequences a virtual channel, upon reception, the receiving UE **22-26** determines the code of the downlink transmission.

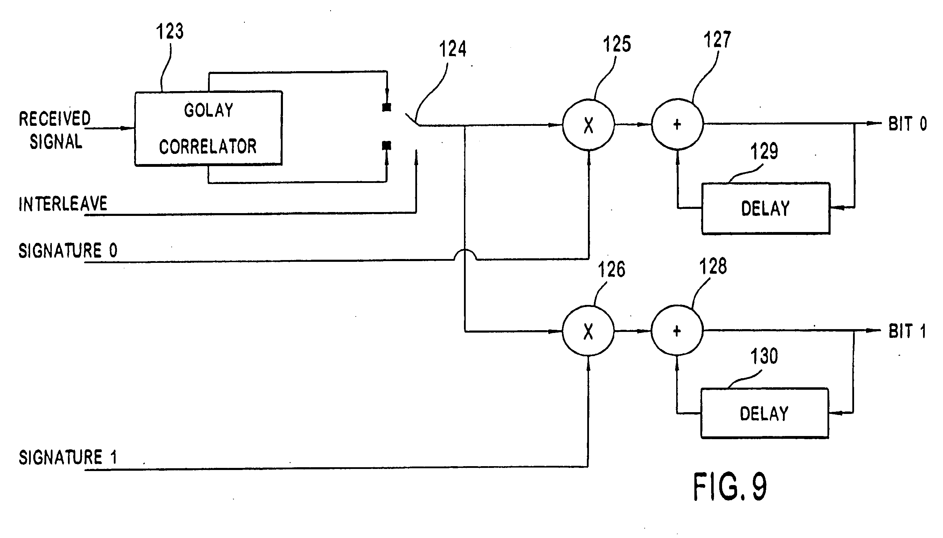

A Golay sequence detector is shown in **Figure 9****.** The received signal is correlated with a Golay Correlator **123** and interleaved by an interleaver **124** to detect the short codes. The arrangement of the short codes for two assigned sequences within the long codes is shown as Signature 0 and 1. Using mixers **125, 126,** the signatures are mixed with the detected short codes. Adders **127, 128** are coupled to the mixer and also to delay devices **129,130.** The delay devices **129,130** take the output of the adders **127, 128** and feed them back to those adders **127, 128** for correlation with the next short sequence. The output of each adder **127, 128** - determines the Golay sequence of the received signal.

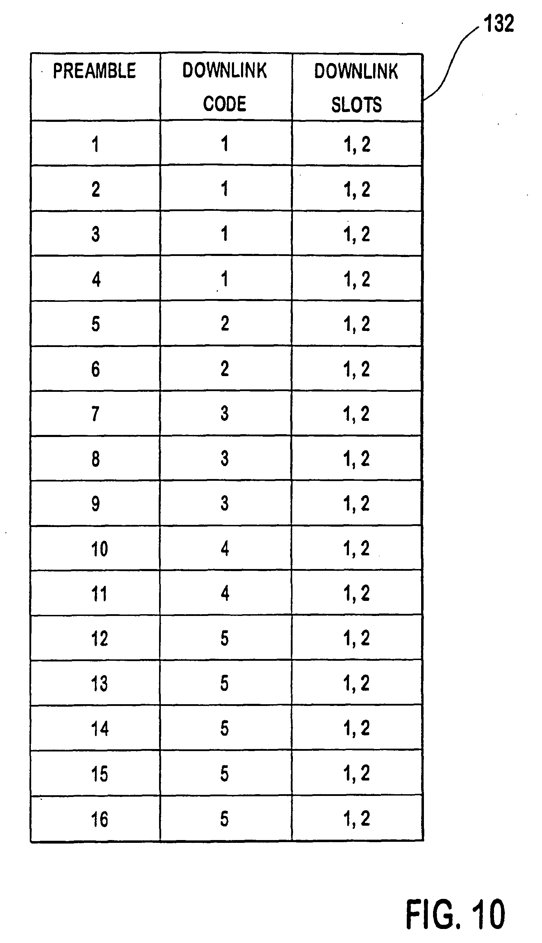

**Figure 10** illustrates an assignment scheme for a system using two time slot multiplexing for the physical channels. In table **132,** each of the sixteen different signatures is assigned a downlink code and one of two time slots. The selected time slot is indicated by the transmitted identifier.

## Claims

1. A method for sending data in a wireless spread spectrum code division multiple access communication system having a common packet channel using a predetermined set of codes, the common packet channel having a plurality of access opportunities, each defined by a time slot (30-34) and signature (36-40), the method **characterized by**:
receiving a signature in the common packet channel;
selecting a code out of a plurality of codes associated with the common packet channel;
transmitting a combined collision signal and channel identifier, the channel identifier indicating the selected code and the channel identifier being associated with the received signature; and
communicating data using the selected code.

2. The method of claim 1 wherein the combined collision signal and channel identifier distinguishes between codes using an inversion.

3. The method of claim 1 wherein the received signature is selected from a set of sixteen signatures and the signature is sent in one of eight slots.

4. The method of claim 1 wherein the selected code is used to define a downlink physical channel for downlink communications.

5. A wireless spread spectrum code division multiple access communication base station (20) for using a common packet channel for communication, the common packet channel using a predetermined set of codes and having a plurality of access opportunities, each access opportunity defined by a time slot (30-34) and signature (36-40), the base station (20) **characterized by**:
means, in response to receiving a signature, for selecting a selected code out of a plurality of codes,
means (136) for transmitting a combined collision signal and a channel identifier, the channel identifier indicating the selected code and the channel identifier being associated with the received signature, and
means for communicating using the selected code.

6. The base station of claim 5 wherein the combined collision signal and channel identifier distinguishes between codes using an inversion.

7. The base station of claim 5 wherein the received signature is selected from a set of sixteen signatures and the signature is sent in one out of eight slots.

8. The base station of claim 5 wherein the selected code is used to define a downlink physical channel for downlink communications.

## Patentansprüche

1. Verfahren zum Senden von Daten in einem drahtlosen Codemultiplex-Vielfachzugriff-Spreizspektrumkommunikationssystem, welches einen gemeinsamen Paketkanal aufweist, unter Verwendung eines vorgegebenen Codesatzes, wobei der gemeinsame Paketkanal mehrere Zugriffsmöglichkeiten aufweist, welche jeweils durch einen Zeitschlitz (30 bis 34) und eine Signatur (36 bis 40) definiert sind, wobei das Verfahren durch das Folgende **gekennzeichnet** ist:
Empfangen einer Signatur in dem gemeinsamen Paketkanal;
Auswählen eines Codes aus mehreren Codes, die mit dem gemeinsamen Paketkanal in Verbindung stehen;
Senden einer Kombination aus einem Kollisionssignal und einer Kanalkennung, wobei die Kanalkennung den ausgewählten Code anzeigt und die Kanalkennung mit der empfangenen Signatur in Verbindung steht; und
Austauschen von Daten unter Verwendung des ausgewählten Codes.

2. Verfahren nach Anspruch 1, wobei mit der Kombination aus Kollisionssignal und Kanalkennung unter Anwendung einer Inversion zwischen den Codes unterschieden wird.

3. Verfahren nach Anspruch 1, wobei die empfangene Signatur aus einem Satz von sechzehn Signaturen ausgewählt ist und die Signatur in einem von acht Zeitschlitzen gesendet wird.

4. Verfahren nach Anspruch 1, wobei der ausgewählte Code verwendet wird, um einen physischen Abwärtskanal für die Abwärtsstreckenkommunikation zu definieren.

5. Basisstation (20) für drahtlose Codemultiplex-Vielfachzugriff-Spreizspektrumkommunikation zur Verwendung eines gemeinsamen Paketkanals für die Kommunikation, wobei der gemeinsame Paketkanal einen vorgegebenen Codesatz verwendet und mehrere Zugriffsmöglichkeiten aufweist, wobei jede Zugriffsmöglichkeit durch einen Zeitschlitz (30 bis 34) und eine Signatur (36 bis 40) definiert ist, wobei die Basisstation (20) durch das Folgende **gekennzeichnet** ist:
Mittel zum Auswählen eines ausgewählten Codes aus mehreren Codes in Reaktion auf den Empfang einer Signatur;
Mittel (136) zum Senden einer Kombination aus einem Kollisionssignal und einer Kanalkennung, wobei die Kanalkennung den ausgewählten Code anzeigt und die Kanalkennung mit der empfangenen Signatur in Verbindung steht; und
Mittel zum Datenaustausch unter Verwendung des ausgewählten Codes.

6. Basisstation nach Anspruch 5, wobei mit der Kombination aus Kollisionssignal und Kanalkennung unter Anwendung einer Inversion zwischen den Codes unterschieden wird.

7. Basisstation nach Anspruch 5, wobei die empfangene Signatur aus einem Satz von sechzehn Signaturen ausgewählt ist und die Signatur in einem von acht Zeitschlitzen gesendet wird.

8. Basisstation nach Anspruch 5, wobei der ausgewählte Code verwendet wird, um einen physischen Abwärtskanal für die Abwärtsstreckenkommunikation zu definieren.

## Revendications

1. Procédé d'envoi de données dans un système de communication d'accès multiple à répartition de code de spectre d'étalement sans fil ayant un canal commun de paquets utilisant un ensemble prédéterminé de codes, le canal commun de paquets ayant une pluralité de possibilités d'accès, chacune d'entre elles étant définie par une fenêtre (30-34) et une signature (36-40), le procédé étant **caractérisé par** les étapes consistant à :
recevoir une signature dans le canal commun de paquets ;
choisir un code parmi une pluralité de codes associés au canal commun de paquets ;
transmettre une combinaison de signal de collision et d'identificateur de canal, l'identificateur de canal indiquant le code choisi et l'identificateur de canal étant associé à la signature reçue ; et
communiquer les données en utilisant le code choisi.

2. Procédé selon la revendication 1, dans lequel la combinaison de signal de collision et d'identificateur de canal fait la distinction entre les codes en utilisant une inversion.

3. Procédé selon la revendication 1, dans lequel la signature reçue est choisie dans un ensemble de seize signatures et la signature est envoyée dans l'une des huit fenêtres.

4. Procédé selon la revendication 1, dans lequel le code choisi est utilisé pour définir un canal physique de liaison descendante pour des communications de liaison descendante.

5. Station de base de communication d'accès multiple à répartition de code de spectre d'étalement sans fil (20) pour utiliser un canal commun de paquets à des fins de communication, le canal commun de paquets utilisant un ensemble prédéterminé de codes et ayant une pluralité de possibilités d'accès, chacune d'entre elles étant définie par une fenêtre (30-34) et une signature (36-40), la station de base (20) étant **caractérisée par** :
un moyen, en réponse à la réception d'une signature, pour choisir un code parmi une pluralité de codes,
un moyen (136) pour transmettre une combinaison de signal de collision et d'identificateur de canal, l'identificateur de canal indiquant le code choisi et l'identificateur de canal étant associé à la signature reçue, et un moyen pour communiquer les données en utilisant le code choisi.

6. Station de base selon la revendication 5, dans laquelle la combinaison de signal de collision et d'identificateur de canal fait la distinction entre les codes en utilisant une inversion.

7. Station de base selon la revendication 5, dans laquelle la signature reçue est choisie dans un ensemble de seize signatures et la signature est envoyée dans l'une des huit fenêtres.

8. Station de base selon la revendication 5, dans laquelle le code choisi est utilisé pour définir un canal physique de liaison descendante pour des communications de liaison descendante.
